# EUROPÄISCHE PATENTANMELDUNG

(11) **EP 1 088 587 A2**
(43) Veröffentlichungstag der Anmeldung: **04.04.2001**
(21) Anmeldenummer: 00118051.2
(22) Anmeldetag: 23.08.2000
(51) Int. Cl.: B01J 19/24

(54) **Verfahren zur Herstellung organischer Verbindungen im Membranreaktor**

(30) Priorität: 01.10.1999 DE 19947505
(71) Anmelder: Degussa-Hüls Aktiengesellschaft, 60287 Frankfurt am Main (DE)
(72) Erfinder: Karau, Andreas, Dr., 67434 Neustad (DE); Wöltinger, Jens, Dr., 63456 Hanau (DE); Burkhardt, Olaf, Dr., 63636 Brachttal (DE); Bommarius, Andreas, Dr., 60596 Frankfurt (DE); Boldt, Kai, 63457 Hanau (DE); Philippe, Jean-Louis, Dr., 63303 Dreieich (DE); Henniges, Hans, Dr., 53111 Bonn (DE); Drauz, Karl-Heinz, Prof., 63579 Freigericht (DE)

(57) **Zusammenfassung**

Bisher wurden in der Katalyse mit molmassenvergrößerten Katalysatoren ausschließlich Polymermembranen verwendet. Hinsichtlich Druckstabilität, Flußrate, Temperaturstabilität und Lösungsmittelstabilität sind die anorganischen Membranen jedoch überlegen.

## Beschreibung

Die vorliegende Erfindung ist auf ein Verfahren zur katalytischen Herstellung organischer Verbindungen gerichtet. Insbesondere arbeitet das Verfahren in Membranreaktoren, welche mit anorganischen Membranen ausgerüstet sind.

Katalytische Prozesse sind dadurch gekennzeichnet, daß der an der Reaktion beteiligte Katalysator nicht oder nur in geringen Mengen verbraucht wird. Selbst im Batchprozess könnte dieser unter idealen Bedingungen unendlich lange für die betrachtete Reaktion eingesetzt werden, wenn nicht Verluste bei der Recyclierung oder Inaktivierungen die Katalysatorleistung mit der Zeit herabsetzen würden. Zur Minimierung der Prozeßkosten bei der im technischen Maßstab durchgeführten katalytischen Synthese kann deshalb die Begrenzung des Verlusts an Katalysator beitragen.

Bevorzugt gegenüber der normalen Katalysatorrecyclierung ist jedoch ein kontinuierlicher Prozess, bei dem der Katalysator in einem Reaktionsgefäß immobilisiert wird, während nur die Reaktanden zugefügt und die Produkte entfernt werden können. Diese Verfahrensweise kann durch den Einsatz von molekulargewichtsvergrößerten Katalysatoren in Membranreaktoren realisiert werden (Wandrey et al. in Jahrbuch 1998, Verfahrenstechnik und Chemieingenieurwesen, VDI S. 151ff.; Wandrey et al. in Applied Homogeneous Catalysis with Organometallic Compounds, Vol. 2, VCH 1996, S.832 ff.; Kragl et al., Angew. Chem. 1996, 6, 684f.).

Schon verschiedentlich wurde im Stand der Technik über molekulargewichtsvergrößerte oder polymervergrößerte Katalysatoren berichtet (Reetz et al., Angew. Chem. 1997, 109, 1559f.; Seebach et al., Helv. Chim Acta 1996, 79, 1710f.; Kragl et al., Angew. Chem. 1996, 108, 684f.; Schurig et al., Chem. Ber./Recueil 1997, 130, 879f.; Bolm et al., Angew. Chem. 1997, 109, 773f.; Bolm et al. Eur. J. Org. Chem. 1998, 21f.; Baystone et al. in Speciality Chemicals 224f.; Salvadori et al., Tetrahedron: Asymmetry 1998, 9, 1479; Wandrey et al., Tetrahedron: Asymmetry 1997, 8, 1529f.; ibid. 1997, 8, 1975f.; Togni et al. J. Am. Chem. Soc. 1998, 120, 10274f., Salvadori et al., Tetrahedron Lett. 1996, 37, 3375f.)

Bei Verfahren, in denen homogen oder kolloidal lösliche molmassenvergrößerte Katalysatoren in Membranreaktoren angewendet wurden, setzte man bisher ausschließlich Polymermembranen organischen Ursprungs ein.

Der Einsatz von Polymermembranen ist jedoch aufgrund der in der chemischen Synthese eingesetzten organischen Lösungsmittel mit verschiedenen Nachteilen behaftet.

Die Lösungsmittelbeständigkeit der zur Zeit auf dem Markt verfügbaren Polymermembranen ist jeweils nur für ausgewählte Lösungsmittel gegeben. Daher sind in der Produktion, je nach Reaktion und Lösungsmittel, unterschiedliche Membranen zu verwenden. In der Praxis bedeutet dieses, daß ein Wechseln der Membranen zwischen verschiedenen Produktionschargen erforderlich ist. Des weiteren ist bei einem Wechsel zwischen polaren und unpolaren Lösungsmitteln ein Zwischenschalten verschiedener Konditionierungsschritte der Membranen notwendig (Schmidt et al.; Chemie Ingenieur Technik (71), 3/1999).

Darüber hinaus ist die Temperaturbeständigkeit der zur Zeit kommerziell erhältlichen Polymermembranen auf maximal 80 °C beschränkt. Literatur- und Herstellerangaben schwanken zwischen 40 - 80 °C für lösungsmittelstabile Polymermembranen. Insbesondere in der homogenen Katalyse kann es jedoch auch erforderlich sein, bei Temperaturen größer als 70 °C zu arbeiten, weil hierdurch der Umsatzgrad verbessert werden kann ("Metal-cat. Cross-coupling Reactions", Ed.: F. Diedrich, P.J. Stang, VCH-Wiley, 1998 "Transition Metals for Org. Synthesis", Ed.: M. Beller, C. Bolm, VCH-Wiley, 1998).

Die Flußraten bei den zur Zeit verfügbaren Polymermembranen im Bereich der Ultra- und insbesondere Nanofiltration sind für einen technischen Einsatz sehr gering. Die erreichbaren Flußraten sind von dem eingesetzten Lösungsmittel sowie der eingesetzten Membran abhängig, liegen aber im Allgemeinen deutlich unter 5 L/m2/h/bar (Schmidt et al.; Chemie Ingenieur Technik (71), 3/1999).

Die mechanische Stabilität der Polymermembranen in Hinblick auf Druck ist gering. Der Einsatz dieser Membranen bei erhöhten Drücken kann nur durch den Einbau in speziell angefertigte und deshalb teure Flach- oder Wickelmodule mit entsprechenden Modulgehäusen technisch realisiert werden.

Aufgabe der vorliegenden Erfindung war es deshalb, ein Verfahren anzugeben, bei dem die oben angesprochenen Probleme hinsichtlich Lösungsmittelabhängigkeit, Drucksensibilität, schlechter Flußrate oder minderer Temperaturbeständigkeit der Membranen nicht auftreten, so daß deren Einsatz zur Herstellung von organischen Verbindungen im industriellen Maßstab bedenkenlos möglich und ökonomisch gesehen vorteilhaft erscheint.

Dadurch, daß man im Verfahren zur Herstellung organischer Verbindungen in einem Membranreaktor mit Hilfe von homogen oder kollodidal löslichen molmassenvergrößerten Katalysatoren als Membran eine anorganische Membran einsetzt, die eine anorganische Stützschicht und eine anorganische Trennschicht aufweist, wobei die Trennschicht mit organischen Gruppen modifiziert sein kann, wird diese Aufgabe in ebenso wirtschaftlicher wie effektiver Weise gelöst.

Prinzipiell ist der Einsatz von anorganischen Membranen zur Rückhaltung und Abtrennung von heterogenen Katalysatoren durch verschiedene Verfahren dokumentiert (z. B. DE 197 27 715 A1), doch wurden solche Membranen bis heute nicht für die Abtrennung homogen oder kolloidal löslicher molmassenvergrößerter Katalysatoren vorgeschlagen.

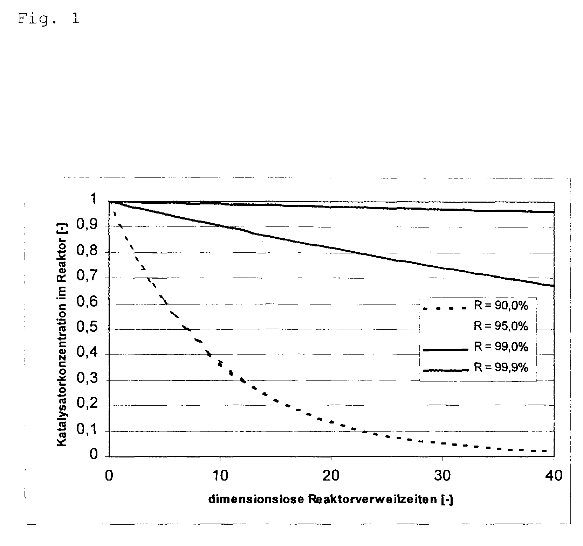

Dies lag zum einen daran, daß anders als bei heterogenen Katalysatoren bei homogen oder kolloidal löslichen molmassenvergrößerten Katalysatoren das Rückhaltevermögen nicht in einfacher Weise mit der Molekülgröße verknüpft ist. Vielmehr wird das Rückhaltevermögen durch den sogenannten hydrodynamischen Moleküldurchmesser bestimmt, der von verschiedenen Parameter abhängig ist (Molekülstruktur, Lösungsmittel etc.). Wie wichtig allerdings eine extrem hohe Rückhaltbarkeit eines Katalysators hinter einer Membran in Bezug auf dessen Verlust durch Ausbluten ist, zeigt die Fig. 1 anhand von einfachen theoretischen Abschätzungen. Erst ab einer Retention deutlich über >99,9 % bleiben die Katalysatoren auch für industriell interessante Verweilzeiten in einem ausreichenden Maß im Reaktor zurück.

Während Polymermembranen schon seit längerer Zeit durch extrem günstige Cut-offs geeignete Verweilzeiten erlauben, sind diese bei anorganischen Membranen erst seit verhältnismäßig kurzer Zeit technisch realisierbar.

Ein anderer Effekt sprach ebenfalls gegen die Benutzung von anorganischen Membranen. Bei vergleichbarem Cut-off ist die Rückhaltbarkeit in der Dead-end-Betreibsweise gegenüber Polymermembranen geringer.

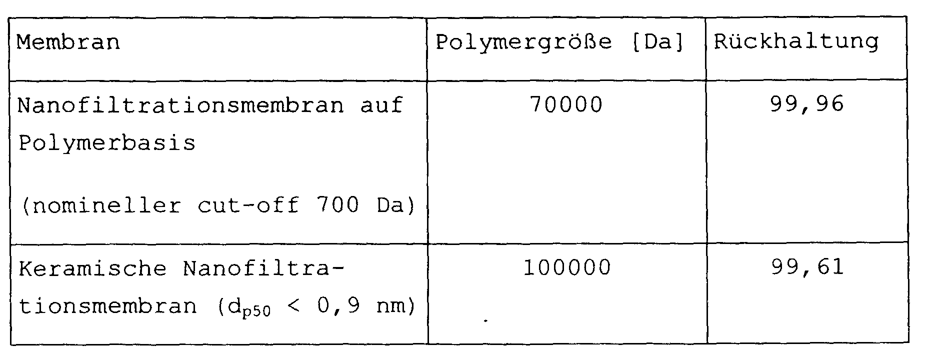

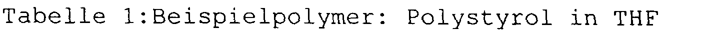

Überraschenderweise hat sich gezeigt, daß bei der cross-flow-Betreibsweise hingegen ein überströmabhängiges Rückhaltevermögen in einem solchen Maße ausbildet, daß schon bei relativ geringen Überströmgeschwindigkeiten dieser Nachteil kompensiert bzw. überkompensiert werden kann (siehe Tab. 2 und Beispiel 1).

Dies war äußerst überraschend, mithin aber nicht weniger vorteilhaft.

**Tab. 2**

| Rückhaltevermögen und Überströmgeschwindigkeiten an einer anorganischen Membran eines Dreikanal Membranmoduls (dp₅₀ < 0,9 nm) für ein Polystyrol-Polymer in THF als Funktion der mittleren Molmasse. | | |
|---|---|---|
| keramische Membran (dp₅₀ < 0,9 nm) | Überströmungsgeschwindigkeit | |
| Molmasse Polymer [Da] | 0,5 m/s | 2 m/s |
| 4000 | 96,72 | 97,60 |
| 47500 | 99,82 | 99,96 |
| 280000 | > 99,98 | > 99,98 |

Als Membranen kommen im Prinzip alle dem Fachmann geläufigen anorganischen Membranen in Frage, welche eine anorganische Stützschicht und eine anorganische Trennschicht aufweisen. Die Trennschicht bildet den eigentlichen zur Rückhaltung notwendigen engen Porendurchmesser, wobei diese durch dem Fachmann bekannte organische Gruppen modifiziert sein kann, um deren Trenneigenschaften (z.B. Hydrophobie und Hydrophilie) zu modifizieren.

Als solche Komponenten kommen z.B. allgemein siliziumorganische Verbindungen in Betracht, insbesondere Alkylsilane in Frage (Noach et. al., Chemie Ingenieur Technik (70) 8/98). Darüberhinaus sind geeignete organische Verbindungen, mit denen die Trennschicht modifiziert werden kann, unter anderem (CH₃)₃SiCl, Methyltriethoxysilan, Ethyltriethoxysilan, Octyltriethyoxysilan, Octadecyltriethoxysilan, Mono- oder Polyfluoralkylethoxysilan oder auch Silane mit funktionalisierten Organogruppen, die eine spätere weitere Modifizierung durch kovalente Bindungsknüpfung in bekannter Weise ermöglichen. Beispiele hierfür sind Trimethoxyvinylsilan, H₂C=C(CH₃)CO₂(CH₂)₃Si(OCH₃)₃, Triethoxyvinylsilan und 3-Glycidoxypropyltrimethoxysilan, sowie Silane mit Hydroxyl-, Carboxyl-, Epoxy- und Carbonsäureestergruppen tragenden anorganischen Resten. In besonderer Ausführungsform ist der Füllstoff mit Silanen der allgemeinen Formel RSi(OX)₃, worin R eine Alkylgruppe mit 1 bis 18 C-Atomen und X eine Alkylgruppe mit 1 oder 2 C-Atomen ist, modifiziert. Zur Erhöhung der Stabilität und Hydrophobizität wird insbesondere Trimethylchlorosilan verwendet, wie beschrieben in Koyano, K. A.; Tatsumi, T.; Tanaka, Y.; Nakata, S. J. Phys. Chem. B 1997, 101, p. 9436 und Zhao, X. S.; Lu, G. Q., J. Phys. Chem. B 1998, 102, p. 1156.

Der mittlere Porendurchmesser der anorganischen Trennschicht sollte so bemessen sein, daß bei einem möglichst hohen Rückhaltevermögen ein wirtschaftlich sinnvoller Fluß des Produkts gewährleistet ist. Bevorzugt sollte er größer als 0,1 nm, besonders bevorzugt größer als 0,4 nm, sein. Die eingesetzte Trennschicht sollte einen oberen mittleren Porendurchmesser von kleiner als 200 nm, besonders bevorzugt kleiner 10 nm, ganz besonders bevorzugt kleiner 1 nm, aufweisen.

Wie schon angedeutet, sind vorteilhafte Membranen solche, die eine Bauweise aufweisen, bei der die Stützschicht der Membran aus einem oder mehreren anorganischen Oxiden, bevorzugt aus Aluminiumoxid und/oder SiO₂, besteht. Auf diese Stützschicht kann darüber hinaus eine oder mehrere Trennschichten aus einem oder mehreren anorganischen Oxiden, bevorzugt Titanoxid, SiO₂, Al₂O₃ und/oder Zirkonoxid, aufgebracht sein. Wie oben angedeutet kann es vorteilhaft sein, die Trennschicht zusätzlich mit organischen Komponenten zu modifizieren.

Wie weiter oben angesprochen, kann die Membran in einer Dead-end-Filtration eingesetzt werden. Erfindungsgemäß vorteilhaft erscheint jedoch die Ausführungsform, bei welcher man die Membran im Cross-Flow-Modus als Mono- oder Multirohrmodul oder als Flachmembran als Plattenmodul mit tangentialer Überströmung in einem Querstromfiltrationsmodul einsetzt. Dabei sollten sich die Überströmgeschwindigkeiten im technisch und wirtschaftlichen Rahmen bewegen. Bevorzugt sind lineare Überströmgeschwindigkeit von 0,01 - 5 m/s, besonders bevorzugt 0,05 - 2 m/s.
Das Verfahren kann in einem Temperaturbereich von 10 - 250 °C und bei einem transmembranen Druck bis max. 150 bar, bevorzugt bis 10 bar, besonders bevorzugt bis 50 bar, durchgeführt werden.

Vorteilhafterweise sind molekulargewichtsvergrößerte Katalysatoren ein dentritisches, lineares oder beliebig verzweigtes Homo- oder Copolymerisat aus Butadien und/oder Isopren oder ein Copolymerisat aus Butadien und/oder Isopren ggf. mit Propylen und/oder Styrol oder ein Blockcopolymerisat aus Polybutadien und/oder Polyisopren ggf. mit Polypropylen und/oder Polystyrol als Polymergerüst oder lineare, verzweigte und dentritische Polymere bestehend aus Polysiloxanen, Polyacrylaten, Polyvinylpyrrolidonen und Polystyrolen.

Bevorzugt kann der molekulargewichtsvergrößerte Katalysatoren als aktives Zentrum einen Katalysator ausgewählt aus der Gruppe der Oxazaborolidine, TADDOLE, Salene, Chinidine, Oxazoline, Aminoalkohole, Diole, Mono- und Diphosphane, - phosphite, -phosphonite, phosphinite aufweisen.

Mit dem erfindungsgemäßen Verfahren können sowohl nicht chirale, racemische wie auch enantiomerenangereicherte organische Verbindungen hergestellt werden.

Vorteile dieses Verfahrens sind neben den bereits beschriebenen Vorteilen beim Einsatz molmassenvergrößerter homogener oder kolloidal löslicher Katalysatoren bei Polymermembranen eine deutliche Erweiterung der möglichen Betriebsparameter in Hinblick auf Druck, Temperatur und Lösungsmittelspektrum unter Verwendung einer Membran. Gleichzeitig liegen die spezifischen Filtratflüsse von anorganischen Membranen im Vergleich zu Polymermembranen bei gleichem nominellen cut-off und entsprechender Überströmungsgeschwindigkeit deutlich höher (Beispiel 1).

Es zeigt sich, daß durch eine optimale Auswahl der Betriebsbedingungen, der Abstimmung der Molmasse und der Art des Polymers auf den mittleren Porendurchmessers der Membran extreme Rückhaltevermögen der Katalysatoren erreicht werden, die einen technischen Einsatz dieser Katalysatoren vorteilhaft ermöglichen.

Im Rahmen der Erfindung wird unter Membranreaktor jedwedes Reaktionsgefäß verstanden, bei dem der Katalysator in einem Reaktor eingeschlossen wird, während niedermolekularere Stoffe dem Reaktor zugeführt werden oder ihn verlassen können. Dabei kann die Membran direkt in den Reaktionsraum integriert werden oder außerhalb in einem separaten Filtrationsmodul eingebaut sein, bei der die Reaktionslösung kontinuierlich oder intermittierend durch das Filtrationsmodul strömt und das Retentat in den Reaktor zurückgeführt wird. Geeignete Ausführungsformen sind u.a. in der WO98/22415 und in Wandrey et al. in Jahrbuch 1998, Verfahrenstechnik und Chemieingenieurwesen, VDI S. 151ff.; Wandrey et al. in Applied Homogeneous Catalysis with Organometallic Compounds, Vol. 2, VCH 1996, S.832 ff.; Kragl et al., Angew. Chem. 1996, 6, 684f. beschrieben.

Unter homogener oder kolloidaler Löslichkeit wird eine Lösung verstanden, bei der eine Phasenseparation unter Einfluß der Schwerkraft oder einer der Schwerkraft äquivalent starken Fliehkraft nicht stattfindet.

Unter molmassenvergrößert wird im Rahmen der Erfindung die Vergrößerung der Molmasse der ins Auge gefaßten Katalysatoren durch adsorptive oder kovalente Bindung an geeignete organische oder anorganische homogen oder kolloidal lösliche Trägermaterialien verstanden, z.B. Nanopartikel (Zhao et al. Angew. Chem. 1999, 111, Nr.3).

Unter enantiomerenangereichert ist das Überwiegen einer optischen Antipode im Gemisch der beiden optischen Antipoden zu verstehen.

### Beispiele:

### 1. Vergleich spezifische Filtratflüsse für anorganische und Polymermembranen

Die spezifischen Filtratflüsse wurden an Flachmembranen mit einer Filtrationsfläche von 26,4 cm² in einem Flachmembranreaktor für zwei verschiedene Lösungsmittel (THF und Methanol) vermessen. Mittels einer Pumpe wurden verschiedene Flußraten (0,05 - 0,25 ml/min) eingestellt und der transmembrane Druckabfall bestimmt. Aus der Druckverlustcharakteristik wurde der mittlere spezifische Filtratfluß ermittelt.

| Membran | Spezifischer Filtratfluß [1/m2/h/bar] | |
|---|---|---|
| | THF | Methanol |
| Polymermembran (nomineller cut-off 700 Da) | 4,6 | 5,5 |
| Polymermembran (nomineller cut-off 10000 Da) | 4,3 | 6,8 |
| Keramik [Flachmembran; dₚ₅₀ < 0,9 nm] | 9,7 | 12,0 |

### 2. Betreiben eines kontinuierlichen CMR-Reaktors mit einer keramischen Membran

Der Reaktor besteht aus einer Crossflow-Filtrationseinheit (Rohrmodul; nominelle Trenngrenze 1000 Da; 25 cm Länge) und einem Reaktorvolumen von 55 ml. Über eine Umwälzpumpe wird der Reaktorinhalt mit den homogen gelösten Katalysatoren kontinuierlich über die Membran im Kreis gefördert. Als Katalysator wird der an ein Polystyrolpolymer (mittlere Molmasse 38 KDa; Dispersität 2,4 ) angebundene Oxazaborolidinligand eingesetzt. Als Beispielreaktion wird die bereits literaturbekannte Reduktion von Tetralon zu Tetralol mittels Boran durchgeführt.

Zu Beginn wird der Katalysator über eine Pumpe in das mit THF gefüllte Kreislaufsystem eingespeist (Endkonzentration im Reaktor: 55 g/L). Mögliche Verunreinigungen werden zunächst mit THF über einen Zeitraum von einer Stunde aus dem Reaktor ausgewaschen. Im Anschluß daran wird die Boranlösung (0,1 M) und die Substratlösung (0,1 M Tetralon) über geeignete Pumpen dem System in equimolaren Mengen zugegeben. Die Verweilzeit wird auf 20 min und der mittlere transmembrane Druck auf 2 bar eingestellt. Unten sind die erreichten Umsatzgrade, ee-Werte und Katalysatorverluste während einer kontinuierlichen Reaktion über einen Zeitraum von 7 h dargestellt. Die Bestimmung des Umsatzes und der EE-Werte erfolgte mittels HPLC. Die Katalysatorkonzentration im Filtrat wurde mittels GPC bestimmt.

| Zeit [h] | Umsatz [%] | ee-Werte [%] | Katalysatorkonzentration im Filtrat [g/L]} |
|---|---|---|---|
| 00:00 | n.B. | n.B. | n.B. |
| 2:00 | 100 | 95,9 | < 0,001 |
| 3:30 | 100 | 94 | < 0,001 |
| 6:00 | 100 | n.B. | < 0,001 |

## Patentansprüche

1. Verfahren zur katalytischen Herstellung organischer Verbindungen in einem Membranreaktor mit Hilfe von homogen oder kolloidal löslichen molmassenvergrößerten Katalysatoren,dadurch gekennzeichnet, daß die Membran eine anorganische Stützschicht und eine anorganische Trennschicht aufweist, wobei die Trennschicht mit organischen Gruppen modifiziert sein kann.

2. Verfahren nach Anspruch 1,
dadurch gekennzeichnet, daß
die Trennschicht einen Porendurchmesser von kleiner als 200 nm, bevorzugt kleiner 10 nm, besonders geeignet kleiner 1 nm, aufweist.

3. Verfahren nach Anspruch 1 und/oder 2,
dadurch gekennzeichnet, daß
die Stützschicht aus Aluminiumoxid und/oder Siliziumoxid aufgebaut ist.

4. Verfahren nach einem oder mehreren der Ansprüche 1 bis 3,
dadurch gekennzeichnet, daß die Trennschicht aus TiO₂, ZrO₂, Al₂O₃ und/oder SiO₂ aufgebaut ist.

5. Verfahren nach einem oder mehreren der Ansprüche 1 bis 4,
dadurch gekennzeichnet, daß
man die Membran im Cross-Flow-Modus als Mono- oder Multirohrmodul oder als Flachmembran als Plattenmodul einsetzt.

6. Verfahren nach Anspruch 5,
dadurch gekennzeichnet, daß
man eine lineare Überströmgeschwindigkeit der Membran von 0,01 - 5 m/s, bevorzugt 0,05 - 2 m/s einhält.

7. Verfahren nach einem oder mehreren der Ansprüche 1 bis 6,
dadurch gekennzeichnet, daß
man in einem Temperaturbereich von 10 - 250 °C und einem transmembranen Druck bis max. 150 bar, bevorzugt bis 10 bar, besonders bevorzugt bis 50 bar, arbeitet.

8. Verfahren nach einem oder mehreren der Ansprüche 1 bis 7,
dadurch gekennzeichnet, daß
man als molekulargewichtsvergrößerte Katalysatoren ein dentritisches, lineares oder beliebig verzweigtes Homo- oder Copolymerisat aus Butadien und/oder Isopren oder ein Copolymerisat aus Butadien und/oder Isopren ggf. mit Propylen und/oder Styrol oder ein Blockcopolymerisat aus Polybutadien und/oder Polyisopren ggf. mit Polypropylen und/oder Polystyrol als Polymergerüst oder lineare, verzweigte und dentritische Polymere bestehend aus Polysiloxanen, Polyacrylaten, Polyvinylpyrrolidonen und Polystyrolen einsetzt.

9. Verfahren nach Anspruch 9,
dadurch gekennzeichnet, daß
der molekulargewichtsvergrößerte Katalysatoren als aktives Zentrum einen Katalysator ausgewählt aus der Gruppe der Oxazaborolidine, TADDOLE, Salene, Chinidine, Oxazoline, Aminoalkohole, Diole, Mono- und Diphosphane, -phosphite, -phosphonite, phosphinite aufweist.

10. Verfahren nach einem oder mehreren der Ansprüche 1 bis 9,
dadurch gekennzeichnet, daß
man enantiomerenangereicherte organische Verbindungen herstellt.
